# EUROPEAN PATENT SPECIFICATION

(11) **EP 2 388 554 B1**
(45) Date of publication and mention of the grant of the patent: **16.01.2013**
(21) Application number: 11166260.7
(22) Date of filing: 16.05.2011
(51) Int. Cl.: G01D 4/00

(54) **Audio-enabled energy meter**
Audio-aktivierte Energiemessvorrichtung
Dispositif de compteur d'énergie à activation audio

(30) Priority: 20.05.2010 US 784472
(43) Date of publication of application: 23.11.2011
(73) Proprietor: General Electric Company, Schenectady, NY 12345 (US)
(72) Inventor: Vadali, Manoj Kumar, 500081, Andhra Pradesh (IN)
(74) Representative: Picker, Madeline Margaret

(56) References cited:
- WO-A2-2008/025939
- US-A- 4 803 632
- US-A- 5 530 738

## Description

The subject matter disclosed herein relates generally to an energy consumption monitoring system having audio capabilities.

Developed and developing countries alike have undertaken significant steps toward complete electrification, providing power to an increasing number of consumers. In many countries, a substantial number of such consumers may be illiterate. For this reason, consumers may have difficulty tracking the amount of power consumed, account balances, and when a prepaid amount of power will become exhausted, unless assisted verbally by a utility representative by phone or in person. Moreover, since power generation may be most efficient at an optimal load, dynamic pricing of generated power may enable the electricity market to generally manage actual demand such that the actual demand more closely resembles optimal demand. For such a market to function, however, consumers would need to keep apprised of the dynamic prices as they change.

US-A-5 530 738 concerns an electronic measuring instrument that measures and records power disturbances and other power parameters on an alternating current system. The instrument incorporates a speech synthesis subsystem, which is capable of providing a spoken report describing power disturbances and other power parameters.

US-A-4 803 632 concerns an intelligent utility meter system. The system includes a meter unit, and a remote display unit including a credit card receptable slot. The remote display unit reads a credit card inserted in the slot, and may make an appropriate charge against the credit card.

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In accordance with the invention, an energy meter is provided as defined in appended claim 1.

In an embodiment, a tangible machine-readable storage medium may have encoded instructions executable by the processor, which may include code configured to perform various functions. For example, the storage medium may include code that may receive power consumption data associated with a load, power utility account information associated with the load, or dynamic power pricing. Some code may determine a power consumption alert factor based at least in part on the power consumption data associated with the load, the power utility account information associated with the load, or the dynamic power pricing. Some code may compare the one or more power consumption alert factors to a power consumption alert trigger point, which may correspond to a possible value of the power consumption alert factor. Some code may generate an audio alert when the power consumption alert factor meets or exceeds the power consumption alert trigger point.

In a further embodiment, a method may include measuring power consumption of a load using metering circuitry and generating a speech audio alert, using the processor, based at least in part on the power consumption measured by the metering circuitry.

Various features, aspects, and advantages of the present invention will become better understood when the following detailed description is read with reference to the accompanying drawings in which like characters represent like parts throughout the drawings, wherein:
FIG. 1 is a block diagram of an embodiment of an electrical system in which audio-enabled energy meters may monitor power consumption by various loads;
FIG. 2 is a block diagram of an embodiment of such an audio-enabled energy meter;
FIG. 3 is a flowchart describing an embodiment of a method for generating audio alerts using the audio-enabled energy meter based on a variety of factors and trigger points;
FIG. 4 is a diagram representing an embodiment of the factors considered by the audio-enabled energy meter in the method of FIG. 3;
FIG. 5 is a diagram representing an embodiment of the trigger points considered by the audio-enabled energy meter in the method of FIG. 3;
FIG. 6 is a plot modeling an embodiment of audio alert trigger points in relation to power consumption and account balance over time;
FIG. 7 is a plot modeling an embodiment of audio alert trigger points in relation to dynamic power pricing;
FIG. 8 is a plot modeling an embodiment of an audio alert provided to indicate a day of peak power consumption during the previous month;
FIG. 9 is a plot modeling an embodiment of hourly and average demand for power when the present techniques are not employed;
FIG. 10 is a plot modeling an embodiment of power utility efficiency and cost per unit of power generated in relation to load; and
FIG. 11 is a plot modeling an embodiment of hourly and average demand for power when the present techniques are employed.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments.

Present embodiments relate to energy meters capable of generating speech audio alerts or audio indications of certain events. Such audio alerts may inform consumers, who may or may not be able to read, of certain power consumption activity. The audio alerts may indicate, among other things, when consumers' prepaid account balances are expected to run out based on their historical power consumption trends; consumers' current account balances; when a bill may due; when power consumption exceeds a threshold; daily, weekly, and monthly average, maximum, and minimum power consumption; when dynamic power prices rise above a maximum threshold or below a minimum threshold; and/or certain information regarding the operation of the energy meter (e.g., an indication of low battery). In addition to improving consumer experience, the audio-enabled energy meters may also enhance the efficiency of power generation. By enabling all consumers, literate and illiterate alike, to keep apprised of dynamic power prices, all consumers may be more likely to adjust their power consumption habits to more closely match an optimal demand.

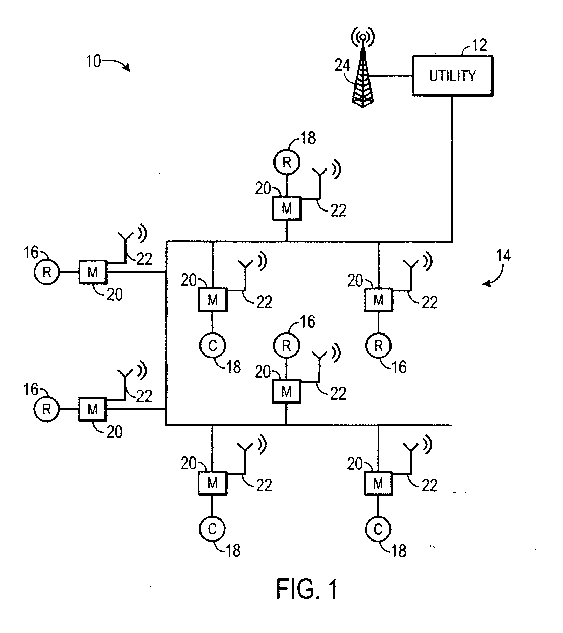

With the foregoing in mind, FIG. 1 represents a block diagram of an electrical system 10, which includes a power utility 12 that supplies power to a power grid 14. Loads on the power grid may include, for example, residential establishments 16 and commercial establishments 18. The power consumption of the residential establishments 16 or commercial establishments 18 may be monitored by audio-enabled energy meters 20. As mentioned above and described in greater detail below, the audio-enabled energy meters 20 may generate audio alerts regarding power consumption activity that may be understood by all consumers, literate or not.

To generate the alerts, the audio-enabled energy meters 20 may monitor power consumed by the residential establishment 16 or the commercial establishment 18 to which it is affixed. Additionally, the audio-enabled energy meters 20 may communicate with the power utility 12 via data communication links 22. Such data communication links 22 may be wired (e.g., over wired telecommunication infrastructure) or wireless (e.g., a cellular network or other wireless broadband, such as WiMax). Similarly, the power utility 12 may employ a communication link 24 to communicate with the various audio-enabled energy meters 20. The communication link 24 may be wired or wireless, as may suitable to communicate to the various communication links 22 of the audio-enabled energy meters 20. Via the communication links 22 to the communication link 24 of the power utility 12, the audio-enabled energy meters 20 may obtain consumer account balance information, dynamic power prices, and/or indications of abnormal activity on the power grid 14 (e.g., rapid spikes in demand). Based on the monitored power consumption and the information obtained via communication with the power utility 12, an audio-enabled energy meter 20 may ascertain certain conditions to which consumers should be alerted and correspondingly may output a suitable alert.

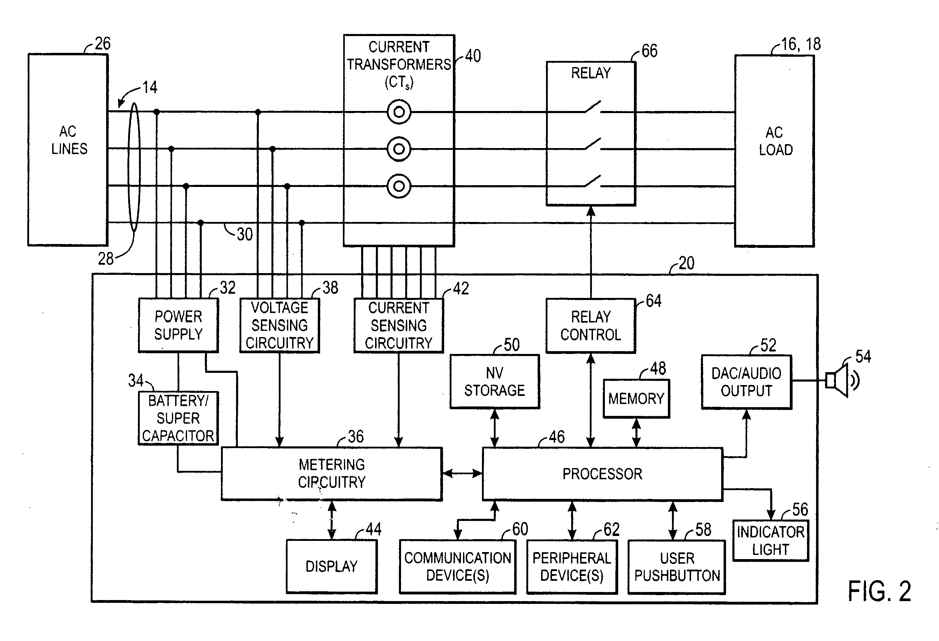

The audio-enabled energy meters 20 may take a variety of forms. One embodiment of a three-phase audio-enabled energy meter 20 appears in FIG. 2 as joined to the power grid 14, as power flows from AC lines 26 to an AC load 16, 18 (e.g., a residential establishment 16 or a commercial establishment 18). Although the embodiment of FIG. 2 involves monitoring three-phase power, alternative embodiments of the audio-enabled energy meter 20 may monitor single-phase power. In the illustrated embodiment, the AC lines 26 may transmit three-phase power via three phase lines 28 and a neutral line 30. The audio-enabled energy meter 20 may obtain power via power supply circuitry 32 that may couple to the three phase lines 28 and the neutral line 30 for its internal power consumption. To backup power consumption data in the event of a power outage, the power supply circuitry 32 may also charge a battery and/or super capacitor 34. In alternative embodiments, the backup power may be fed by a non-rechargeable battery.

Metering circuitry 36 may ascertain power consumption by monitoring the voltage and current traversing the AC lines 26 to the AC load 16, 18. In particular, voltage sensing circuitry 38 may determine the voltage based on the three phase lines 28 and the neutral line 30. Current transformers (CTs) 40 and current sensing circuitry 42 may determine the current flowing through the three phase lines 28. The metering circuitry 36 may output the current power consumption values to an electronic display 44, such as an LCD display, as well as to a processor 46. The metering circuitry 36 may sense the voltage and current inputs and send corresponding pulses to the processor 46, which calculates the energy accumulation, power factor, active power, reactive power and maximum demand, etc. The processor 46 may store the demand details in memory 48 and/or nonvolatile storage 50, which may be NVRAM (EEPROM). In certain embodiments, multiple functions of the audio-enabled energy meter 20 may be implemented in a single chip solution, in which a single chip will perform both the voltage/current sensing and the calculation of demand parameters. From the demand data in the processor 46 (which would be the main chip in case of single ship solution), the processor 46 will generate the data for announcements, as discussed further below, based on user configured settings (trigger points). If the processor 46 is capable of converting digital data into analog, directly analog signals will be given to audio output circuitry 52, which may be an in-built speaker or external powered speakers connected by the consumer. If the processor 46 is not capable of converting the digital data into analog, the signals from the processor may be fed to a digital to analog converter (DAC) in the audio output circuitry 52, which may perform the digital to analog audio conversion before outputting the audio.

The processor 46 may include one or more microprocessors, such as one or more "general-purpose" microprocessors, one or more application-specific processors (ASICs), or a combination of such processing components, which may control the general operation of the audio-enabled energy meter 20. For example, the processor 46 may include one or more instruction set processors (e.g., RISC), audio processors, and/or other related chipsets. Memory 48 and nonvolatile storage 50 may store the current and/or certain historical power consumption values, as well as provide instructions to enable the processor 46 to generate an audio alert, as discussed in greater detail below. The processor 46 may output such audio alerts to audio output circuitry 52, which may further provide the audio alert to a speaker 54. By way of example, the audio output circuitry 52 may convert data from the processor 46 into an audio signal, which may be accessible via an audio jack terminal (e.g., a 3.5mm audio jack). In some embodiments, the output circuitry 52 may be optional, if the processor 46 is capable of providing analog signals directly to the speaker 54. A consumer may place powered speakers, such as the speaker 54, inside the residential establishment 16 or the commercial establishment 18. Thereafter, even when the audio-enabled energy meter 20 is located outdoors, the consumer may hear the audio alerts while indoors.

Programs or instructions executed by the processor 46 to generate the audio alerts may be stored in any suitable manufacture that includes one or more tangible, computer-readable media at least collectively storing the executed instructions or routines, such as, but not limited to, the memory devices and storage devices described below. Also, these programs encoded on such a computer program product may also include instructions that may be executed by processor 46 to enable the audio-enabled energy meter 20 to provide various functionalities, including those described herein.

For example, instructions or data to be processed by the processor 46 may be stored in the memory 48, which may include a volatile memory, such as random access memory (RAM); a non-volatile memory, such as read-only memory (ROM); or a combination of RAM and ROM devices, or may be stored internal to the processor 46 and/or metering circuitry 36. The memory 48 may store firmware for the audio-enabled energy meter 20, such as a basic input/output system (BIOS), an operating system, various programs, applications, or any other routines that may be executed on the audio-enabled energy meter 20, including user interface functions, processor functions, image acquisition functions, audio alteration functions, media playback functions, and so forth. The memory 48 may be optional if the processor 46 is capable of storing such information and/or firmware in its internal memory.

In addition, the nonvolatile storage 50 may be utilized for persistent storage of data and/or instructions. The nonvolatile storage 50 may include flash memory, a hard drive, or any other optical, magnetic, and/or solid-state storage media. By way of example, the nonvolatile storage 50 may be used to store data files, such as historical power consumption as determined by the metering circuitry 36, as well as indications of consumer account balance information, dynamic power prices, and/or abnormal activity on the power grid 14 as communicated to the audio-enabled energy meter 20 by the power utility 12. For example, in certain embodiments, the nonvolatile storage 50 may store average and maximum rates of power consumption per hour, day, week, and/or month.

In addition to generating an audio alert based on the instructions contained in the memory 48 or nonvolatile storage 50, the processor 46 may cause an indicator light 56 to blink or flash. If the consumer has not heard the audio alert but sees the indicator light 56 blinking or flashing, the consumer may cause the audio-enabled energy meter 20 output the audio alert again by, for example, pressing a user pushbutton 58. In certain embodiments, the consumer may press the user pushbutton 58 to navigate a menu to selectively indicate which audio alerts the consumer desires to hear, as well as to set thresholds for certain audio alert trigger points, as discussed further below. The menus and user interface of the audio-enabled energy meter 20 also may be presented in audio in lieu of, or in addition to, graphical representations of the menus and interface on the display 44.

As mentioned above, the audio-enabled energy meter 20 may communicate with the power utility 12 to obtain indications of consumer account balance information, dynamic power prices, and/or abnormal activity on the power grid 14. Such communication may take place via one or more communication devices 60, which may include interfaces for a personal area network (PAN), such as a Bluetooth network, a local area network (LAN), such as an 802.11x Wi-Fi network, a wide area network (WAN), such as a 3G or 4G cellular network (e.g., WiMax), an infrared (IR) communication link, a Universal Serial Bus (USB) port, and/or a power line data transmission network such as Power Line Communication (PLC) or Power Line Carrier Communication (PLCC). Additionally, the audio-enabled energy meter 20 may connect to various peripheral devices 62, such as computing devices (e.g., computers or portable phones) or input devices (e.g., a keyboard).

In certain embodiments, the power utility 12 may communicate with the audio-enabled energy meter 20 to remotely control the flow of power to the AC load 16, 18. Based on instructions from the power utility 12 via the communication device(s) 60, the processor 46 may correspondingly instruct relay control circuitry 64 to open or close a relay 66. For example, if the consumer has not paid for the power being received, the relay 66 may be opened, disconnecting the AC load 16, 18 from the AC lines 26. Once the consumer has paid for further electrical power, the power utility 12 may instruct the audio-enabled energy meter 20 to close the relay 66, reconnecting power to the AC load 16, 18.

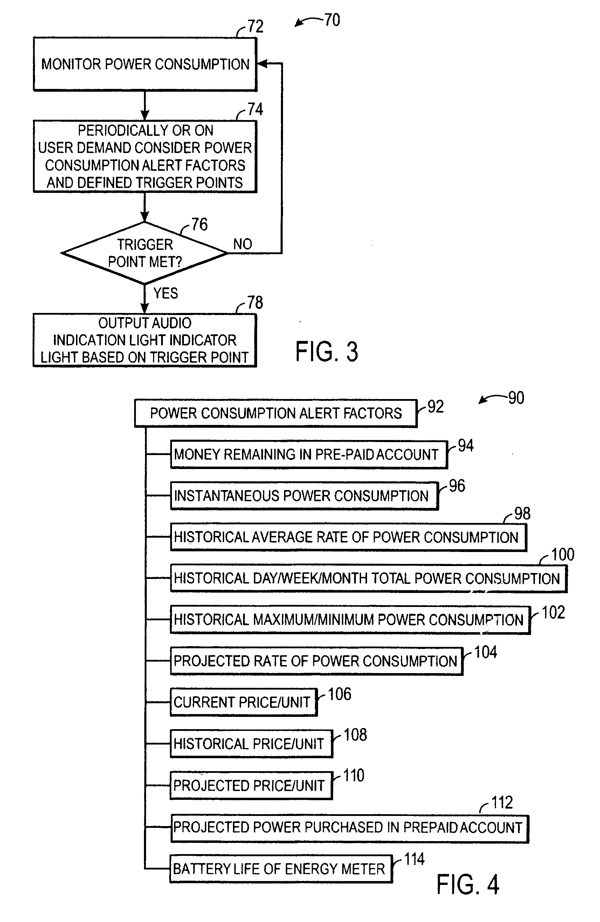

FIG. 3 is a flowchart 70 describing one embodiment of a method for generating an audio alert when certain conditions relating power consumption are met. The flowchart 70 may begin as the audio-enabled energy meter 20 monitors the power consumption of a load (block 72), such as a residential establishment 16 or a commercial establishment 18. Certain power consumption data may be stored (e.g., in the nonvolatile storage 50) to maintain historical information regarding the rate of power consumption at various times. The audio-enabled energy meter 20 also may calculate certain other information (e.g., projected rate of power consumption) based on the stored power consumption data. Other information related to consumer account balance information, dynamic power prices, and/or abnormal activity on the power grid 14 also may be stored and/or processed by the audio-enabled energy meter 20. For example, the audio-enabled energy meter 20 may ascertain a projected amount of pre-paid electrical power remaining in a consumer account.

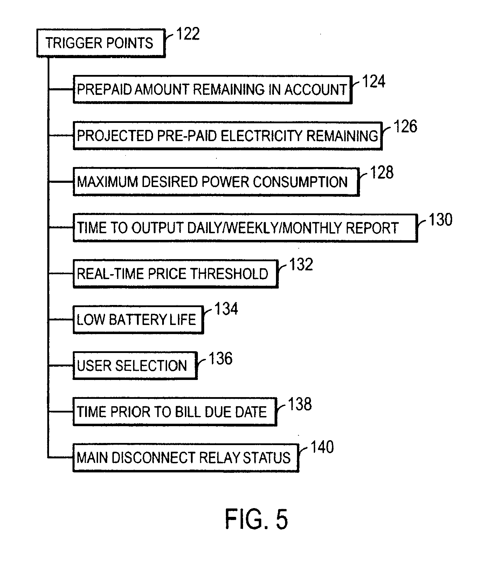

Such various information received and/or determined by the audio-enabled energy meter 20 may be referred to as load profile data or power consumption alert factors. These power consumption alert factors are described in greater detail below with reference to FIG. 4. Periodically, or on user demand (e.g., when a consumer presses the user pushbutton 58), the audio-enabled energy meter 20 may consider the power consumption alert factors, as well as various trigger points, to determine whether to output an audio alert (block 74). The trigger points may be certain values of the power consumption alert factors that represent conditions to which a consumer should be alerted, and are discussed in greater detail with reference to FIG. 5. If such a trigger point is met (decision block 76), the audio-enabled energy meter 20 may output an audio alert to the audio output circuitry 52 and/or may light the indicator light 56 (block 78). The particular audio alert issued by the audio-enabled energy meter 20 may depend upon the trigger point that has been met, as discussed below with reference to FIG. 5. To provide one example, if the power consumption exceeds a predefined threshold, the audio-enabled energy meter 20 may output a speech audio alert stating, for example, "Power consumption high." Additionally or alternatively, the audio alerts may include, for example, alarms, certain rings, chimes, or tones, and so forth. If a trigger point is not met (decision block 76), the audio-enabled energy meter 20 may continue to monitor the power consumption (block 72) as before.

As illustrated in block 74 of FIG. 3, the audio-enabled energy meter 20 may consider a variety of power consumption alert factors and defined trigger points. FIG. 4 illustrates a factor diagram 90 representing an embodiment of many such power consumption alert factors 92 that the audio-enabled energy meter 20 may consider to generate an audio alert. As illustrated in FIG. 4, a first factor 94 of the power consumption alert factors 92 may be an amount of money that remains in the consumer's pre-paid account, if the user maintains a pre-paid account. This first factor 94 may enable the audio-enabled energy meter 20 to determine how much more power the consumer may be entitled to at the current price of power. A second factor 96 of the power consumption alert factors 92 may be the instantaneous value of power consumption. As mentioned above, at certain times, the instantaneous power consumption may become very high or very low, exceeding a trigger point and causing the audio-enabled energy meter 20 to output an audio alert stating, "Power consumption high."

A third factor 98 of the power consumption alert factors 92 may be a historical average rate of power consumption. Such a historical average rate of power consumption may represent power consumed over a period of minutes, hours, days, weeks, or months, and so forth. A fourth factor 100 of the power consumption alert factors 92 may be a historical total amount of power consumed during certain defined periods of time (e.g., certain hours, days, weeks, or months, and so forth). A fifth factor 102 of the power consumption alert factors 92 may be historical maximum or minimum rates of power consumption. Such rates of power consumption may include, for example, power consumption per month, per week, per day, per hour, per minute, per second, and so forth.

The audio-enabled energy meter 20 may calculate a sixth factor 104 of the power consumption alert factors 92 based on the factors 96-102 or others, which may be a projected rate of power consumption that is likely to take place in the future. For example, the audio-enabled energy meter 20 may determine that the consumer is likely to maintain, increase, or decrease the average amount of power consumed over the next hours, days, weeks, or months, and so forth, depending on the historical rate of power consumed. In some embodiments, the audio-enabled energy meter 20 may only determine an average projected rate of power consumption, but in other embodiments, the audio-enabled energy meter 20 may project particular power consumption patterns based on previous patterns of power consumption. For example, if the consumer typically consumes more power during the day than at night, the projected power consumption of days in the future may exceed that of the projected power consumption of nights in the future.

If the power utility 12 charges dynamic prices for power based on current power supply and demand, a seventh factor 106 of the power consumption alert factors 92 may be a current dynamic price per unit of power. Historical dynamic prices may be an eighth factor 108 of the power consumption alert factors 92 considered by the audio-enabled energy meter 20. Based on the factors 106 and 108 or others, the audio-enabled energy meter 20 may calculate a projected price at certain times in the future, which may be a ninth factor 110 of the power consumption alert factors 92. In some embodiments, the audio-enabled energy meter 20 may only determine an average projected price, but in other embodiments, the audio-enabled energy meter 20 may project particular dynamic price patterns based on previous patterns of dynamic prices. For example, if the dynamic prices are typically higher during the day than at night, the projected dynamic prices may be higher during the day than at night.

Based on the power consumption alert factors 94, 104, and 106 and/or 110 (the amount of money remaining in the prepaid account, the projected rate of power consumption, and the current price of power and/or the projected price of power), the audio-enabled energy meter 20 also may ascertain a projected amount of electricity that may be purchased before more money must be added to the account, which may serve as an eleventh factor 112 of the power consumption alert factors 92. The eleventh factor 112 also may represent a particular projected amount of time that power will continue to be supplied. For example, the audio-enabled energy meter 20 may determine that a certain number of days of power (at historical power consumption rates and prices) can be purchased with the current amount of money in the prepaid account (e.g., only 3 days of power remain). The power consumption alert factors 92 may further include certain factors related to the operation of the audio-enabled energy meter 20. For example, a twelfth factor 114 of the power consumption alert factors 92 may be the amount of charge remaining in the battery 34.

In addition to the power consumption alert factors 92, the audio-enabled energy meter 20 may also consider various trigger points to determine whether to output an audio alert. FIG. 5 is a factor diagram 120 representing an embodiment of many such trigger points 122 that the audio-enabled energy meter 20 may consider to generate an audio alert. Each of the trigger points 122 may be preset by the manufacturer of the audio-enabled energy meter 20, set by the consumer, and/or may be set by the power utility 12 based on instructions communicated to the audio-enabled energy meter 20.

A first trigger point 124 of the trigger points 122 may be a particular amount of money remaining in prepaid account. Thus, the first trigger point 124 may be met when the particular amount or a lesser amount remains in the prepaid account, as indicated by the factor 94 of the power consumption alert factors 92. The audio-enabled energy meter 20 may then output an audio alert stating, for example, "Only $10 of energy is available in your account - please recharge your account soon."

Similarly, a second trigger point 126 of the trigger points 122 may be a particular projected amount of electricity that may be purchased based on the amount of money remaining in the prepaid account and/or a particular amount of time such electricity will be provided. Thus, the second trigger point 126 may be met when the eleventh factor 112 indicates that less than the particular projected amount of electricity or time remains. For example, the audio-enabled energy meter 20 may output an audio alert stating, "Only five days of energy remains in your pre-paid account," or "Please recharge your account at account@powerutilitvname.com within two days to maintain an un-interrupted power supply."

A third trigger point 128 of the trigger points 122 may be a particular maximum power consumption threshold. By way of example, a consumer may plan to limit his or her maximum power consumption at any given time beneath a specific threshold. The user may program the threshold into the audio-enabled energy meter 20 via the user pushbutton 58 or other input peripheral devices 62. If the instantaneous power consumption measured by the audio-enabled energy meter 20 crosses the defined threshold, the audio-enabled energy meter 20 may output an audio alert stating, "Power consumption high."

A fourth trigger point of the trigger points 122 may be a particular time at which the audio-enabled energy meter 20 may produce a report regarding power consumption taking place over a recent period of time. At such a time to produce a report (e.g., 7AM, 5PM, etc.), the audio-enabled energy meter 20 may output an audio alert indicating recent maximum demand, recent total or average power consumption, the recent cost of the amount of power consumed, total power consumed during a defined window (e.g., 7PM to 9PM), and so forth. In one example, the audio-enabled energy meter 20 may output an audio alert stating, "Your maximum demand for the last 24 hours is 27kW." In another example, the audio-enabled energy meter 20 may output an audio alert stating, "Last week you consumed approximately $85 of electricity," or "Last week you consumed approximately 342 units of electricity." The audio-enabled energy meter 20 also may output audio alerts stating, for example, "Your consumption last week from 7PM to 9PM was high," or "Your power consumption for last month was around 252 units or $210."

A fifth trigger point 132 of the trigger points 122 may be a particular maximum or minimum threshold dynamic price of power. If the power utility 12 employs dynamic pricing, the audio-enabled energy meter 20 may issue an audio alert when the price of power increases beyond such a threshold, indicating that the consumer should reduce power consumption to prevent excessive costs. Additionally or alternatively, if the consumer is generating power and is willing to sell the power to the power grid 14 when the price becomes high enough, the audio-enabled energy meter 20 may issue an audio alert indicating that the consumer should plan to sell power when such thresholds are crossed. By way of example, the audio-enabled energy meter 20 may issue audio alerts stating, "Unit price of energy has increased by 125% - schedule loads to other times to pay less," or "Unit price of energy has increased by 125% - sell energy to grid."

A sixth trigger point 134 of the trigger points 122 may be a preset threshold of battery life remaining in the battery 34, or similar thresholds for other operational features of the audio-enabled energy meter 20. By way of example, the audio-enabled energy meter 20 may output an audio alert stating, "Battery low - please contact service@powerutilitvname.com to replace battery."

A seventh trigger point 136 of the trigger points 122 may be a user selection of information stored within the audio-enabled energy meter 20. Such a selection may result in the audio-enabled energy meter 20 outputting any of the audio alerts described above or below, based on the preference of the user at the time the selection is made. For example, the user may desire to know the current dynamic price of power. As such, the user may navigate through the user interface of the audio-enabled energy meter 20 via the pushbutton 58 to make such a selection. In response, the audio-enabled energy meter 20 may determine the current dynamic price of power before issuing an audio alert, such as, "The present cost per unit is $5.60/unit."

An eighth trigger point 138 of the trigger points 122 may be a particular time prior to a utility bill due date. In one example, the consumer may elect to receive audio alerts exactly one week before the electrical bill is due. When the time arrives, the audio-enabled energy meter 20 may output an audio alert stating, for example, "Please pay your bill within one week to maintain an uninterrupted power supply." If the consumer has failed to pay a bill to the point that the power utility 12 has cut power to the consumer, the audio-enabled energy meter 20 may output an audio alert stating, for example, "Power has been cut because a bill has not been paid. Please pay the bill to restore power."

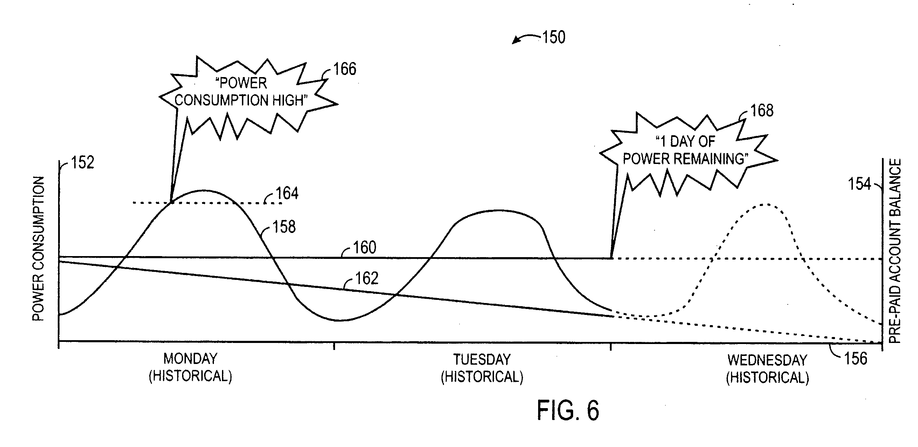

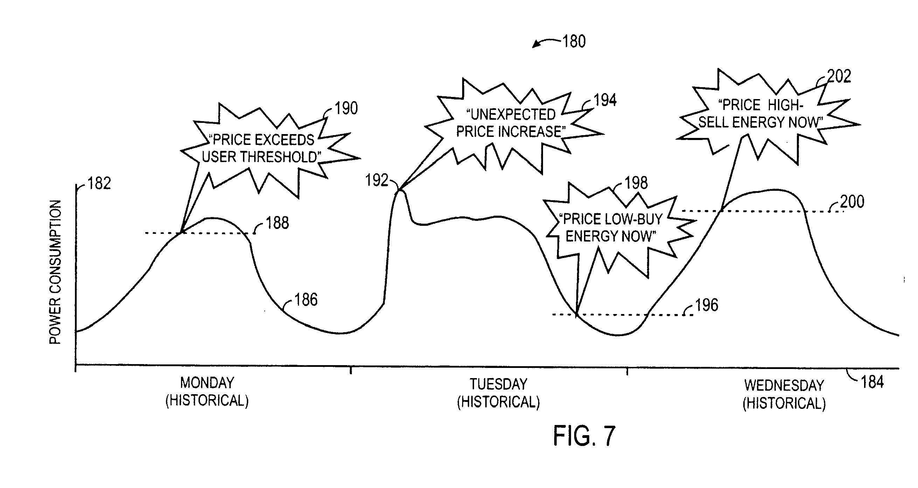

FIGS. 6 and 7 are plots providing visual representations of the application of the trigger points 122 to the power consumption alert factors 92. In particular, FIG. 6 presents a plot 150 comparing power consumption (first ordinate 152) and a pre-paid account balance (second ordinate 154) over time in days (abscissa 156). A curve 158 represents the instantaneous power consumption of the consumer, while a curve 160 represents the average power consumption of the consumer. A curve 162 represents a pre-paid account balance of the consumer as the power is consumed. In the plot 150, the curves 158, 160, and 162 are illustrated as solid lines for the first two days to represent historical data obtained by the audio-enabled energy meter 20. The curves 158, 160, and 162 are illustrated as dashed lines for the third day to represent a projection of power expected to be consumed based on the historical data.

When the instantaneous power consumption of the curve 158 crosses a threshold 164 (e.g., implicating the third trigger point 128), the audio-enabled energy meter 20 may output an audio alert stating, for example, "Power consumption high." Similarly, based on the projected power consumption of the curves 158 and 160, as well as the corresponding projected account balance of curve 162, the audio-enabled energy meter 20 may determine when the account balance is expected to become depleted and power will cut off (e.g., implicating the second trigger point 126). The audio-enabled energy meter 20 thus may output an audio alert that states, for example, "One day of power remaining," as indicated by numeral 168, when such a condition is determined.

FIG. 7 presents a plot 180 comparing the dynamic price of power (ordinate 182) over time in days (abscissa 184). As noted above, the audio-enabled energy meter 20 may consider the dynamic price of power in several contexts. For example, as the dynamic price changes, as illustrated by a curve 186, the dynamic price may exceed certain thresholds (e.g., implicating the fourth trigger point 132). Thus, as the curve 186 exceeds a user-defined high price threshold 188, the audio-enabled energy meter 20 may output an audio alert 190 stating, for example, "Price exceeds user threshold." If the price unexpectedly rises as represented by a numeral 192, which may be due to a grid destabilizing event, the audio-enabled energy meter 20 may output an audio alert 194 stating, for example, "Unexpected price increase." If the price drops beneath a threshold at which the consumer wishes to purchase energy, as shown by a numeral 196, the audio-enabled energy meter 20 may output an audio alert 198 stating, for example, "Price low - buy energy now." Similarly, if the consumer wishes to sell energy above a certain high price threshold, as indicated at numeral 200, and the price exceeds the threshold, the audio-enabled energy meter 20 may output an audio alert 202 stating, for example, "Price high - sell energy now."

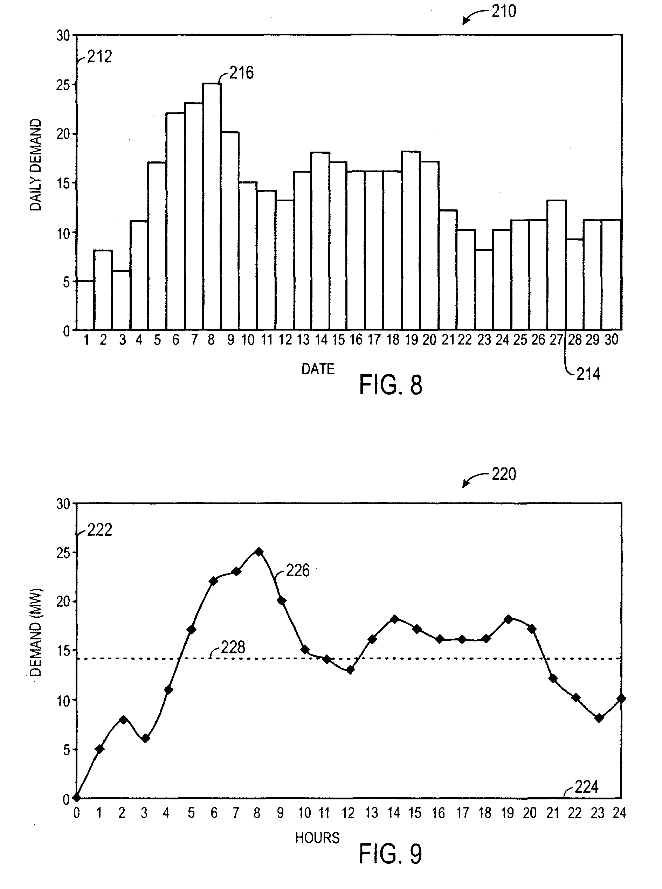

As mentioned above, the audio-enabled energy meter 20 also may indicate when power consumption reached a maximum historical value. Plot 210 of FIG. 8 compares daily power consumption, or demand, in units of kWh (ordinate 212) over a span of a month in units of days (abscissa 214). As mentioned above, the audio-enabled energy meter 20 may store historical values of power consumption, occasionally reviewing such data to generate audio alerts. As represented in the plot 210, a maximum daily power consumption occurs on the eighth day of the month, at approximately 25 kWh. Thus, when prompted or when such a report is periodically prepared automatically, the audio-enabled energy meter 20 may output an audio alert stating, for example, "Maximum daily demand of the previous month was 25 kWh, occurring on April 8."

When all consumers, literate and illiterate alike, can adjust their power consumption based on dynamic pricing, as shown in FIG. 7, the power utility 12 may experience higher efficiency. FIG. 9 is a plot 220 representing an aggregate demand on the power utility 12 in units of MW (ordinate 222) over a period of one day in units of hours (abscissa 224) when consumers consume power without regard to dynamic price or in the absence of dynamic pricing. Hourly demand may change dramatically throughout the day, as represented by a curve 226, fluctuating around an average daily demand, as represented by a curve 228.

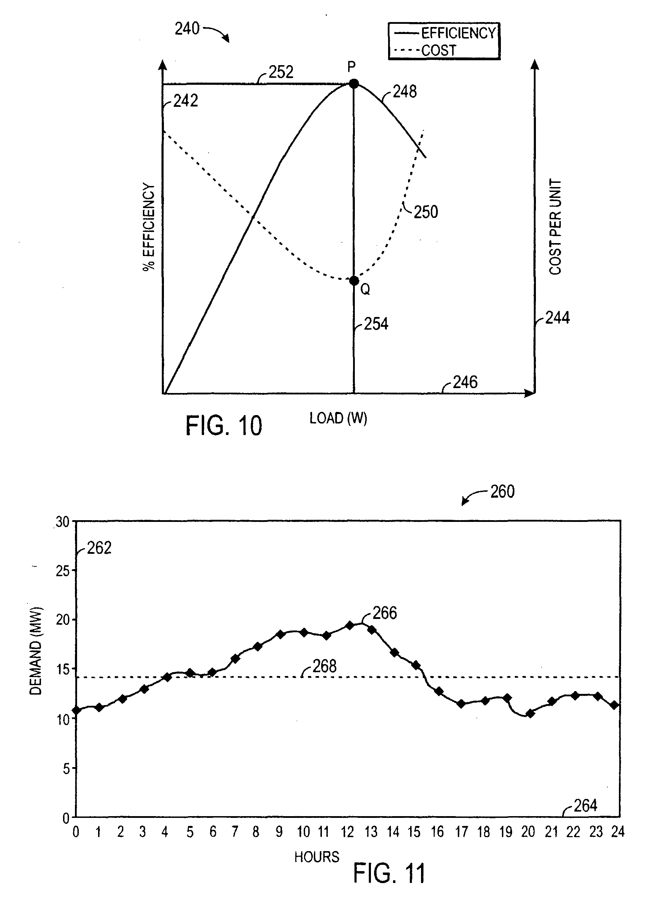

However, as represented by a plot 240 of FIG. 10, even when maximum efficiency is achieved at a load equal to the average demand 228, the fluctuations in hourly demand 226 will inevitably lead to inefficiencies and higher generation costs. The plot 240 of FIG. 10 models typical power generation efficiency (first ordinate 242) and power generation cost (second ordinate 244) against load (abscissa 244). A curve 248 represents efficiency and a curve 250 represents a cost per unit of power generated. In the plot 240, the efficiency curve 248 increases in efficiency as load increases until reaching a maximum efficiency 252 at an optimal load 254, beyond which power generation becomes less efficient. The cost curve 250 reaches a minimum at the same optimal load 254.

When consumers consume power without regard to the dynamic pricing because the consumers are unaware of dynamic prices or the current amount of power they are consuming, which may be more likely to occur when the consumers cannot read, the load may change dramatically from hour to hour, as illustrated in the plot 210 of FIG. 9. When the load is dramatically higher or lower than the optimal load 254, power generation becomes less efficient and, accordingly, more expensive per unit of energy produced. Thus, even if the average demand 228 matched the optimal load 254, the dramatic variations of the hourly demand 226 around the average demand 228 would result in reduced efficiency.

On the other hand, plot 260 of FIG. 11 represents aggregate demand on the power utility 12 when consumers are aware of current dynamic prices and/or the current amount of power they are consuming. Plot 260 represents an aggregate demand on the power utility 12 in units of MW (ordinate 262) over a period of one day in units of hours (abscissa 264). Hourly demand may change throughout the day, as represented by a curve 266, but may fluctuate relatively slightly around an average daily demand, as represented by a curve 268. Since consumers may be more apprised of current prices and/or current power consumption, the consumers may adjust their power consumption habits in a manner that offers improved efficiency and lower costs to power utility owners and/or operators. These effects may be particularly noticeable to power utilities serving consumer populations with higher illiteracy.

Various technical effects of the presently disclosed subject matter include a simplified manner of informing consumers of their power consumption. Especially because some consumers may be unable to read, or may otherwise require a customer service representative to speak to them, audio-enabled energy meters 20 may allow such consumers to more easily purchase and consume power. In addition, more consumers, literate and illiterate alike, may be more likely to remain aware of current prices for power and/or their current power consumption. Such consumers may adjust their power consumption habits in a manner that results in higher efficiency and lower costs for power utility owners and/or operators.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An energy meter comprising:
   metering circuitry configured to monitor power consumption of a load; and
   a processor configured to generate a speech audio alert based at least in part on the power consumption of the load.
2. The energy meter of clause 1, wherein the speech audio alert is configured to indicate when instantaneous power consumption exceeds a threshold.
3. The energy meter of any preceding clause, wherein the speech audio alert is configured to report at least one of a total, average, maximum, or minimum power consumption over a period of time.
4. The energy meter of any preceding clause, comprising communication circuitry configured to obtain account information associated with the load from a power utility, wherein the processor is configured to generate another speech audio alert based at least in part on the account information.
5. The energy meter of any preceding clause, wherein the other speech audio alert is configured to indicate an account balance.
6. The energy meter of any preceding clause, wherein the other speech audio alert is configured to indicate a bill deadline or instruct a consumer to pay a bill associated with an account.
7. The energy meter of any preceding clause, wherein the processor is configured to generate the speech audio alert based at least in part on the account information, wherein the speech audio alert is configured to indicate a remaining amount of prepaid power.
8. The energy meter of any preceding clause, wherein the processor is configured to determine a projected future power consumption of the load based at least in part on the power consumption of the load and to generate the speech audio alert based at least in part on the projected future power consumption of the load and the account information, wherein the speech audio alert is configured to indicate a remaining prepaid amount of time that power is projected to be provided in the future.
9. The energy meter of any preceding clause, wherein the speech audio alert is configured, when a bill has not been paid and power is cut as a result, to indicate that the power has failed because the bill has not been paid.
10. The energy meter of any preceding clause, comprising communication circuitry configured to obtain dynamic power prices from a power utility, wherein the processor is configured to generate another speech audio alert based at least in part on the dynamic power prices.
11. The energy meter of any preceding clause, wherein the other speech audio alert is configured to indicate when the dynamic power prices rise above a threshold.
12. The energy meter of any preceding clause, wherein the other speech audio alert is configured to indicate when power should be sold to the power utility.
13. The energy meter of any preceding clause, wherein the other speech audio alert is configured to indicate when the dynamic power prices fall below a threshold.
14. The energy meter of any preceding clause, wherein the other speech audio alert is configured to indicate when power should be bought from the power utility.
15. A tangible machine-readable storage medium having encoded instructions executable by a processor, the encoded instructions comprising:
   code configured to receive power consumption data associated a load, power utility account information associated with the load, or dynamic power pricing;
   code configured to determine a power consumption alert factor based at least in part on the power consumption data associated with the load, the power utility account information associated with the load, or the dynamic power pricing;
   code configured to compare the power consumption alert factor to a power consumption alert trigger point, wherein the power consumption alert trigger point corresponds to a possible value of the power consumption alert factor; and
   code configured to generate an audio alert when the power consumption alert factor meets or exceeds the power consumption alert trigger point.
16. The tangible machine-readable storage medium of any preceding clause, wherein the power consumption alert factor comprises an amount of money in a prepaid account, current power consumption, a historical average rate of power consumption over a period of time, a historical total amount of power consumed over the period of time, a historical maximum or minimum rate of power consumption over the period of time, a projected future rate of power consumption, a current dynamic power price, a historical dynamic power price, a projected future dynamic power price, an amount of prepaid power allocated to the prepaid account, or an amount of time the prepaid power is expected to be supplied.
17. The tangible machine-readable storage medium of any preceding clause, wherein the code configured to determine the power consumption alert factor is configured to determine the power consumption alert factor by projecting when a prepaid amount of power is expected to become exhausted in the future.
18. The tangible machine-readable storage medium of any preceding clause, comprising code configured to store historical values of the power consumption data associated with the load, the power utility account information associated with the load, or the dynamic power pricing in a database.
19. A method comprising:
   measuring power consumption of a load using metering circuitry; and
   generating a speech audio alert, using a processor, based at least in part on the power consumption measured by the metering circuitry.
20. The method of any preceding clause, comprising storing historical values of power consumption measured by the metering circuitry in a database accessible to the processor, wherein the speech audio alert is configured to be generated, using the processor, based at least in part on the historical values of power consumption.

## Claims

1. An energy meter (20) comprising:
metering circuitry (36) configured to monitor power consumption of a load (16, 18); and
a processor (46) configured to generate a speech audio alert based at least in part on the power consumption of the load (16, 18), **characterised by**:
communication circuitry (60) configured to obtain dynamic power prices from a power utility (12), wherein the processor (46) is configured to generate another speech audio alert based at least in part on the dynamic power prices.

2. The energy meter (20) of claim 1, wherein the speech audio alert is configured to indicate when instantaneous power consumption exceeds a threshold.

3. The energy meter (20) of any preceding claim, wherein the speech audio alert is configured to report at least one of a total, average, maximum, or minimum power consumption over a period of time.

4. The energy meter (20) of any preceding claim, comprising communication circuitry (60) configured to obtain account information associated with the load from a power utility (12), wherein the processor (46) is configured to generate another speech audio alert based at least in part on the account information.

5. The energy meter (20) of claim 4, wherein the other speech audio alert is configured to indicate an account balance.

6. The energy meter (20) of claim 4 or claim 5, wherein the other speech audio alert is configured to indicate a bill deadline or instruct a consumer to pay a bill associated with an account.

7. The energy meter (20) of any of claims 4 to 6, wherein the processor (46) is configured to generate the speech audio alert based at least in part on the account information, wherein the speech audio alert is configured to indicate a remaining amount of prepaid power.

8. The energy meter (20) of any preceding claim, wherein the processor (46) is configured to determine a projected future power consumption of the load (16, 18) based at least in part on the power consumption of the load (16, 18) and to generate the speech audio alert based at least in part on the projected future power consumption of the load (16, 18) and the account information, wherein the speech audio alert is configured to indicate a remaining prepaid amount of time that power is projected to be provided in the future.

9. The energy meter (20) of any preceding claim, wherein the speech audio alert is configured, when a bill has not been paid and power is cut as a result, to indicate that the power has failed because the bill has not been paid.

## Patentansprüche

1. Energiezähler (20), aufweisend:
eine Messschaltung (36), die dafür eingerichtet ist, den Stromverbrauch einer Last (16, 18) zu überwachen und/oder
einen Prozessor (46), der dafür eingerichtet ist, einen gesprochenen Warnhinweis wenigstens teilweise auf der Basis des Stromverbrauchs der Last (16, 18) zu erzeugen,
**gekennzeichnet durch**:
eine Kommunikationsschaltung (60), die dafür eingerichtet ist, von einem Stromversorger (12) dynamische Strompreise zu erhalten, wobei der Prozessor (46) dafür eingerichtet ist, wenigstens teilweise auf der Basis der dynamischen Strompreise einen weiteren gesprochenen Warnhinweis zu erzeugen.

2. Energiezähler (20) nach Anspruch 1, wobei der gesprochene Warnhinweis dafür eingerichtet ist, anzuzeigen, wenn ein momentaner Stromverbrauch einen Schwellenwert überschreitet.

3. Energiezähler (20) nach einem der vorstehenden Ansprüche, wobei der gesprochene Warnhinweis dafür eingerichtet ist, wenigstens einen von einem Gesamt-, Durchschnitts-, Maximal- oder Minimalstromverbrauch über einer Zeitperiode anzusagen.

4. Energiezähler (20) nach einem der vorstehenden Ansprüche, mit einer Kommunikationsschaltung (60), die dafür eingerichtet ist, Kontoinformation in Verbindung mit der Last von einem Stromversorger (12) zu erhalten, wobei der Prozessor (46) dafür eingerichtet ist, einen weiteren gesprochenen Warnhinweis wenigstens teilweise auf der Basis der Kontoinformation zu erzeugen.

5. Energiezähler (20) nach Anspruch 4, wobei der weitere gesprochene Warnhinweis dafür eingerichtet ist, einen Kontostand anzusagen.

6. Energiezähler (20) nach Anspruch 4 oder Anspruch 5, wobei der weitere gesprochene Warnhinweis dafür eingerichtet ist, eine Rechnungsfrist anzusagen oder einen Verbraucher aufzufordern, eine einem Konto zugeordnete Rechnung zu bezahlen.

7. Energiezähler (20) nach einem der Ansprüche 4 bis 6, wobei der Prozessor (46) dafür eingerichtet ist, einen gesprochenen Warnhinweis wenigstens teilweise auf der Basis der Kontoinformation zu erzeugen, wobei der gesprochene Warnhinweis dafür eingerichtet ist, ein Restguthaben von vorausbezahltem Strom anzusagen.

8. Energiezähler (20) nach einem der vorstehenden Ansprüche, wobei der Prozessor (46) dafür eingerichtet ist, einen voraussichtlichen zukünftigen Stromverbrauch der Last (16, 18) wenigstens teilweise auf der Basis des Stromverbrauchs der Last (16, 18) zu ermitteln und einen gesprochenen Warnhinweis wenigstens teilweise auf der Basis des voraussichtlichen zukünftigen Stromverbrauchs der Last (16, 18) und der Kontoinformation zu erzeugen, wobei der gesprochene Warnhinweis dafür eingerichtet ist, einen restliches vorausbezahltes Guthaben von Zeit anzusagen, in der voraussichtlich Strom in der Zukunft geliefert wird.

9. Energiezähler (20) nach einem der vorstehenden Ansprüche, wobei der gesprochene Warnhinweis dafür eingerichtet ist, wenn eine Rechnung nicht bezahlt worden ist und der Strom demzufolge abgeschaltet worden ist, anzusagen, dass der Strom abgeschaltet wurde, weil die Rechnung nicht bezahlt worden ist.

## Revendications

1. Compteur (20) d'énergie comportant :
des circuits de mesure (36) conçus pour surveiller la consommation d'électricité par une charge (16, 18) ; et
un processeur (46) conçu pour produire une alerte sonore vocale au moins en partie d'après la consommation d'électricité par la charge (16, 18), **caractérisé par** :
des circuits de communication (60) conçus pour obtenir d'une compagnie d'électricité (12) des tarifs dynamiques de l'électricité, le processeur (46) étant conçu pour produire une autre alerte sonore vocale au moins en partie d'après les tarifs dynamiques de l'électricité.

2. Compteur (20) d'énergie selon la revendication 1, dans lequel l'alerte sonore vocale est conçue pour indiquer le moment où la consommation instantanée d'électricité dépasse un seuil.

3. Compteur (20) d'énergie selon l'une quelconque des revendications précédentes, dans lequel l'alerte sonore vocale est conçue pour signaler au moins une des consommations totale, moyenne, maximale ou minimale d'électricité au cours d'un laps de temps.

4. Compteur (20) d'énergie selon l'une quelconque des revendications précédentes, comportant des circuits de communication (60) conçus pour obtenir d'une compagnie d'électricité (12) des informations comptables correspondant à la charge, le processeur (46) étant conçu pour produire une autre alerte sonore vocale au moins en partie d'après les informations comptables.

5. Compteur (20) d'énergie selon la revendication 4, dans lequel l'autre alerte sonore vocale est conçue pour indiquer un solde comptable.

6. Compteur (20) d'énergie selon la revendication 1, dans lequel l'autre alerte sonore vocale est conçue pour indiquer une date d'échéance de facture ou demander à un consommateur de payer une facture correspondant à un compte.

7. Compteur (20) d'énergie selon l'une quelconque des revendications 4 à 6, dans lequel le processeur (46) est conçu pour produire une alerte sonore vocale au moins en partie d'après les informations comptables, l'alerte sonore vocale étant conçue pour indiquer une quantité restante d'électricité prépayée.

8. Compteur (20) d'énergie selon l'une quelconque des revendications précédentes, dans lequel le processeur (46) est conçu pour déterminer une consommation future projetée d'électricité par la charge (16, 18) au moins en partie d'après la consommation d'électricité par la charge (16, 18) et pour produire l'alerte sonore vocale au moins en partie d'après la consommation future projetée d'électricité par la charge (16, 18) et les informations comptables, l'alerte sonore vocale étant conçue pour indiquer un laps de temps prépayé restant pendant lequel il est prévu qu'à l'avenir soit fournie de l'électricité.

9. Compteur (20) d'énergie selon l'une quelconque des revendications précédentes, dans lequel l'alerte sonore vocale est conçue, lorsqu'une facture n'a pas été honorée et que l'électricité est par conséquent coupée, pour indiquer qu'il n'y a plus d'électricité parce que la facture n'a pas été honorée.
